# EUROPEAN PATENT SPECIFICATION

(11) **EP 0 597 499 B1**
(45) Date of publication and mention of the grant of the patent: **26.01.2000**
(21) Application number: 93118395.8
(22) Date of filing: 12.11.1993
(51) Int. Cl.: G06F 17/60

(54) **Electronic note book**
Elektronisches Notizbuch
Agenda électronique

(30) Priority: 13.11.1992 JP 30396892
(43) Date of publication of application: 18.05.1994
(73) Proprietor: SHARP KABUSHIKI KAISHA, Osaka-shi, Osaka-fu 545-0013 (JP)
(72) Inventor: Inui, Kenichi, Kita-Katsuragi-gun, Nara-ken (JP); Fukutomi, Hiroshi, Osaka-shi, Osaka-fu (JP); Masui, Teruhisa, Neyagawa-shi, Osaka-fu (JP)
(74) Representative: Müller, Frithjof E., Dipl.-Ing.

(56) References cited:
- EP-A- 0 339 220
- EP-A- 0 344 803
- EP-A- 0 434 231
- EP-A- 0 461 400
- EP-A- 0 472 070
- DEITEL H.M. 'INTRODUCTION TO OPERATING SYSTEMS' 1984 , ISBN 0-201-14502-2, READING, ADDISON WESLEY PUBL. CIE , US * page 493, line 28 - line 34 *
- IBM TECHNICAL DISCLOSURE BULLETIN. vol. 32, no. 8A , January 1990 , NEW YORK US pages 364 - 368 'METHOD FOR 3-DIMENSIONAL'
- IBM TECHNICAL DISCLOSURE BULLETIN. vol. 29, no. 7 , December 1986 , NEW YORK US page 2992 'INTEGRATED DAY, WEEK AND MONTH MODE IN SCHEDULE PROGRAM'

## Description

### BACKGROUND OF THE INVENTION

### 1. Field of the Invention

The present invention relates to an electronic note device, and more particularly to the electronic note device which is capable of systematically managing data of plural application programs stored in the electronic note device itself with simple key operations independently of the data kind. The present invention may be used for a portable information device, a personal computer and the like in addition to the electronic note device.

### 2. Description of the Related Art

Conventionally, the plural pieces of data stored in the electronic note device are managed independently according to applications such as a phone book, a schedule and a memo and are managed by a single or plural indexes for the applications in an alphabetical order or a date order.

Further, for transferring each data piece, the function of the corresponding application has been requested to be used individually according to the data to be transferred.

An electronic note device comprising a memory for storing plural pieces of data in respective areas according to various applications, input means for inputting data to said memory, display means for displaying data stored in said memory and control means for controlling said memory, said input means and said display means is known from EP-A-0 461 400, for example.

Next, with respect to a function of managing themes, a general electronic note device has been arranged so that "themes" such as "what content", until when", and "what priority order" may be inputted along inquiry items ("concrete contents of the themes", " data limit" and "priority order") and the registered theme contents may have been sequentially called by a calling key.

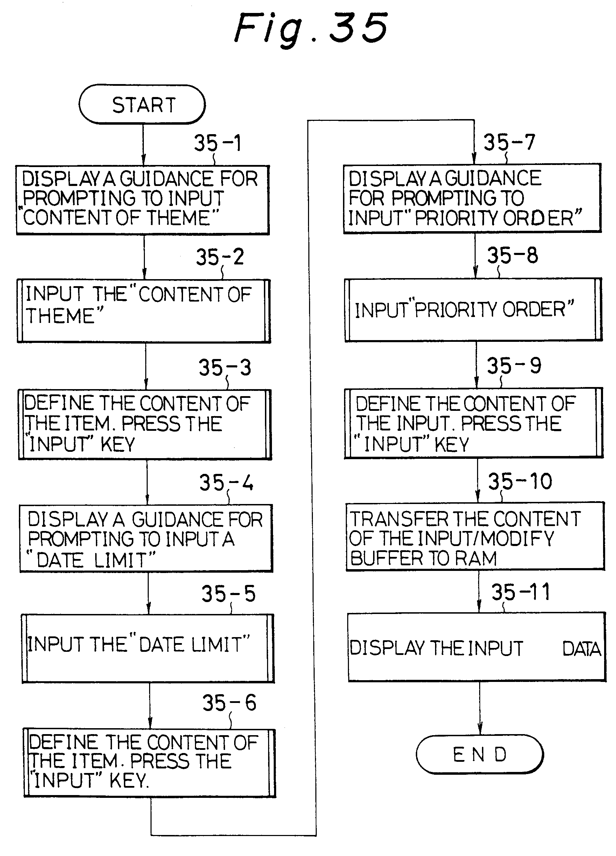

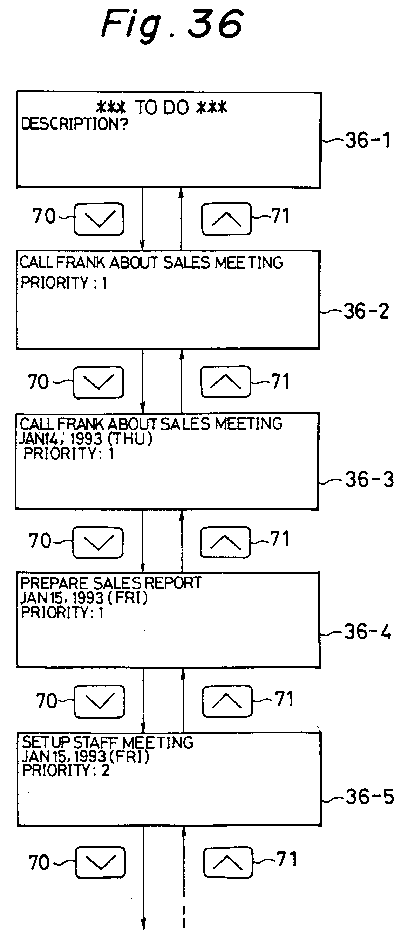

Fig. 35 is a flowchart showing a conventional routine of inputting data about the function of managing the themes. Fig. 36 is a view showing a screen display of the data about the function of managing the themes called by a calling operation.

In Fig. 35, on the screen of a LCD display, a guidance for prompting to input "the content of a theme" is displayed (35-1). "The content of a theme" is inputted (35-2), the item content is established by an operation and then an input key is pressed (35-3). A guidance for prompting an input of "date limit" is displayed (35-4), the date limit is inputted (35-5), and the item content is established by an operation and then an input key is pressed (35-6). Then a guidance for prompting an input of "priority order" is displayed (35-7), the priority order is inputted (35-8), the input content is established by an operation and an input key is pressed (35-9). Then, the content of an input/modify buffer is transferred to a RAM (35-10) and the inputted data is displayed (35-11).

In Fig. 36, an initial screen about a function of managing themes (36-1) is displayed. The data with no "due date" is displayed first (screen 36-2). The data is called in the order of "due date" by a feed key 70 (screen 36-3). The data can be called in the reverse order of "due date" by a reverse feed key 71. If the plural data has the same "due date", they are called in the order of "priority" (on the screens 36-4 and 36-5) (In the displays of the screens 36-4 and 36-5, "Prepare sales report" and "Set-up staff meeting" are the concrete contents of the themes, "Jan. 15, 1993 (FRI)" is the due date, and "Priority: 1 and Priority: 2" are the priority orders. )

As stated above, the plural data contained in an electronic note device are managed independently according to the applications such as a phone book, a schedule and a memo. Hence, the relative data items crossed over the applications are disallowed to be systematically managed in a related manner.

Hence, it has been difficult to collectively manage the data about a specific person or the data about a specific project. No method has been prepared for transferring plural data items crossed over the applications such as a phone book, a schedule and a memory to another electronic device at one time. Hence, such a data is required to be transferred for each application one operation by one operation. When receiving plural data items, they are divided into the corresponding applications for managing them. As a result, no means has been prepared for easily distinguishing the received data from the pre-stored data for management.

### SUMMARY OF THE INVENTION

It is therefore an object of the present invention is to provide an electronic note device which is capable of managing various kinds of data crossed over various applications like a phone book, a schedule and a memo as data about a specific person or project.

The object of the invention can be achieved by an electronic note device according to Claim 1.

In the electronic note device according to the invention, the second memory stores data selected from each data item stored according to the way of use in the first memory. The control means operates to control the operation of the second memory and the display means so that the input means is enabled to input the data in the second memory and the display means is enabled to display the data in the second memory. Hence, various kinds of data items crossed over different applications such as a phone book, a schedule, and a memo contained in the electronic note are allowed to be optionally managed for preventing overlapped storage of data.

In the electronic note according to the invention, the second memory stores data selected from each data stored in the first memory according to its object. The control means serves to control the input means so that the data may be inputted to the second memory and controls the operation of the second memory and the display means so that the data stored in the second memory may be displayed in the display means. Hence, various kinds of data crossed over various applications such as the phone book, the schedule, and the memo contained in the electronic note are allowed to be optionally managed and are not stored in an overlapped manner.

Further objects and advantages of the present invention will be apparent from the following description of the preferred embodiments of the invention as illustrated in the accompanying drawings.

### BRIEF DESCRIPTION OF THE DRAWINGS

Fig. 1 is a block diagram showing a hardware, arrangement of an electronic note device according to an embodiment of the present invention.
Fig. 2 is a view showing a drawer display on an LCD display.
Fig. 3 is a view showing an index on the LCD display.
Fig. 4 is a view for explaining data files managed by applications, respectively.
Fig. 5 is a view for explaining a folder index.
Fig. 6 is a view for explaining a method for managing a memory in each application.
Fig. 7 is a flowchart showing a first procedure for registering data.
Fig. 8 comprising Fig. 8 (i) and Fig. 8 (ii) is a flowchart showing a second procedure for registering data.
Fig. 9 is a view for explaining a main body layout of the electronic note device according to the embodiment of the present invention.
Fig. 10 is a view showing a first display example on the LCD display.
Fig. 11 is a view showing a second display example on the LCD display.
Fig. 12 is a view showing a third display example on the LCD display.
Fig. 13 is a view showing a fourth display example on the LCD display.
Fig. 14 is a view showing a fifth display example on the LCD display.
Fig. 15 is a view showing a sixth display example on the LCD display.
Fig. 16 comprising Fig. 16 (i) and Fig. 16 (ii) is a flowchart showing a procedure for transferring data.
Fig. 17 is a view showing a seventh display example on the LCD display.
Fig. 18 is a view showing an eighth display example on the LCD display.
Fig. 19 is a view showing a ninth display example on the LCD display.
Fig. 20 is a flowchart showing a procedure for receiving data.
Fig. 21 is a view showing a tenth display example on the LCD display.
Fig. 22 is a view showing an eleventh display example on the LCD display.
Fig. 23 is a view showing a twelfth display example on the LCD display.
Fig. 24 is a view showing a thirteenth display example on the LCD display.
Fig. 25 is a view showing a fourteenth display example on the LCD display.
Fig. 26 is a view for explaining a hardware arrangement of another electronic note device
Fig. 27 is a view showing an arrangement of a RAM.
Fig. 28 is a view showing an arrangement of a keyboard.
Fig. 29 is a view for explaining a function selecting key.
Fig. 30 is a flowchart for explaining a start of a program.
Fig. 31 is a view showing a fourteenth display example on the LCD display.
Fig. 32 is a view showing a fifteenth display example on the LCD display.
Fig. 33 is a view showing a calendar display of a month listed to have a monthly theme.
Fig. 34 is a view for explaining the conventional calendar display.
Fig. 35 is a flowchart for explaining a procedure for inputting data in the conventional theme managing function.
Fig. 36 is a view for explaining a display of a screen given by data calling in the conventional theme managing function.

### DESCRIPTION OF THE PREFERRED EMBODIMENT

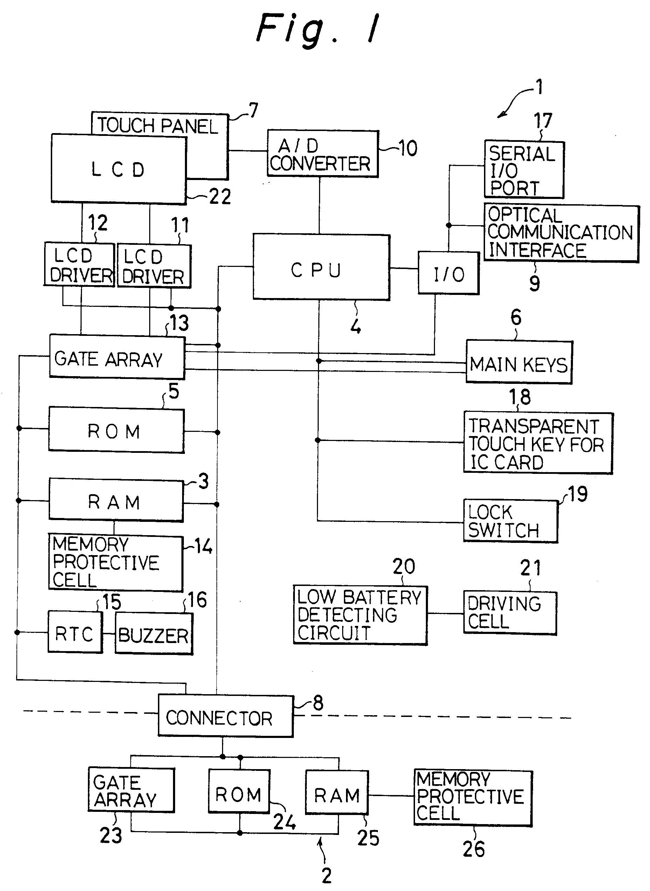

Fig. 1 is a block diagram showing a hardware arrangement of an electronic note device according to an embodiment of the present invention.

An electronic note device 1 is composed of a RAM 3, a CPU 4, a ROM 5, main keys 6, a touch panel 7, a connector 8 with an IC card, an optical communication interface 9, an A/D converter 10, drivers for an LCD device 11, 12, a gate array 13, a memory protective cell 14, a real-time clock (RTC) 15, a buzzer 16, a serial I/O port 17, a transparent touch key for an IC card 18, a lock switch 19, a low battery detecting circuit 20, and a driving cell 21. The IC card 2 to be connected to the electronic note device 1 through the connector 8 is composed of a gate array 23, a ROM, a RAM 25, and a memory protective cell 26.

The RAM 3 for storing inputted data and the CPU 4 served as a control section are connected to the ROM 5 for storing electronic note functions and application prograns, a display device, a RAM 1, and keys 6 for inputting data. The touch panel 7 is provided for enhancing the operativity of tie hardware. The IC card 2 is provided for expanding the function. The optical communication interface 9 is provided foe communicating with another communicating device. Those components are suitably added according to the ways of use. They are not essential for embodying the present invention.

The electronic note device stated here indicates a portable electronic device having at least two applications of (1) an electronic note function of managing a phone number and (2) a schedule function which is capable of managing a schedule. The electronic note device described in this embodiment includes twelve applications of a schedule, an anniversary day 1, an anniversary day 2, theme management, a user file 1, a user file 2, a user file 3, a phone book 1, a phone book 2, a phone book 3, a note book, and an outline processor.

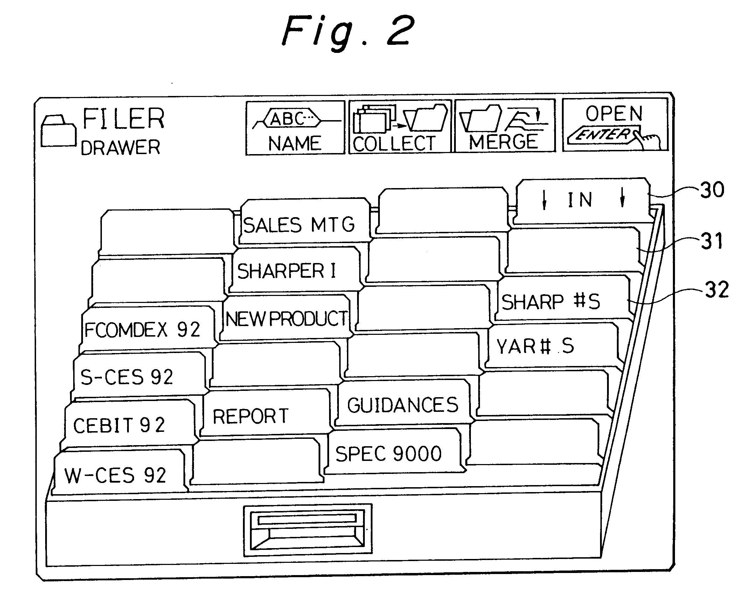

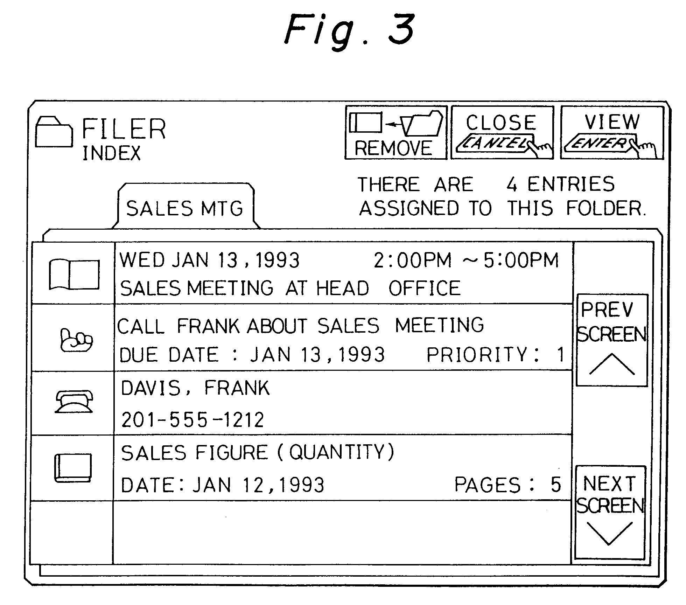

Fig. 2 shows "Drawer" in an LCD display. Fig. 3 shows "Index" in the LCD display.

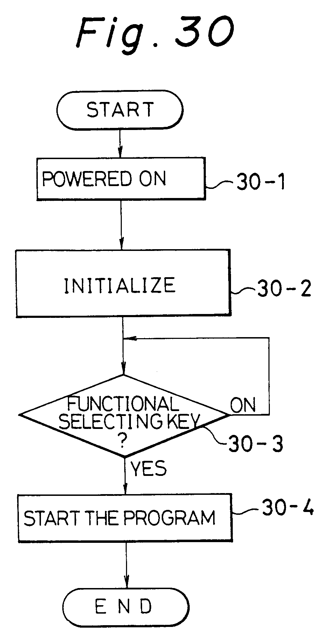

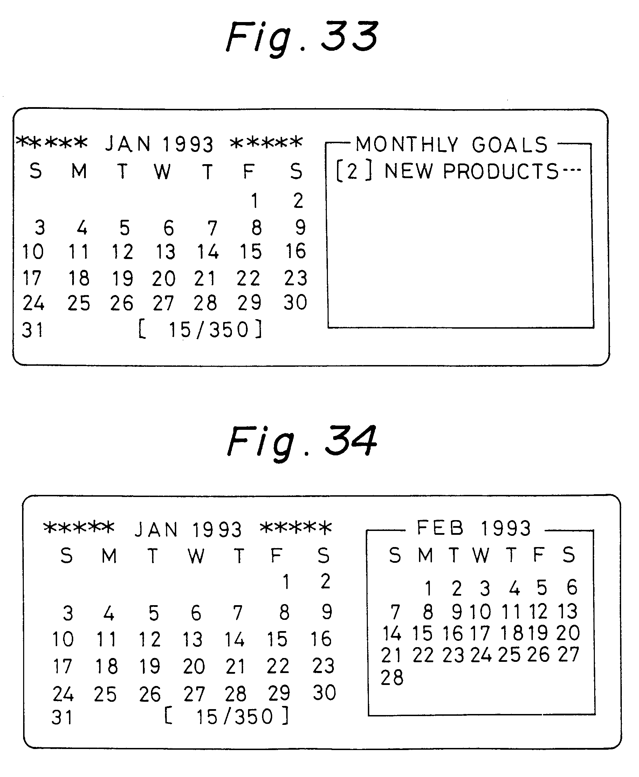

The functions of this embodiment includes two display states, that is, "drawer" display shown in Fig. 2 and "index" shown in Fig. 3. In Fig. 2, 30 denotes an IN folder. 31 and 32 denote folders. In Fig. 3, 33 denotes schedule data. 34 denotes data for managing a theme. 35 denotes data stored as the phone book 1. 36 denotes data stored as a note book. The "drawer" electronically stands for a safe board of a document, in which plural "folders" are stored. "Folder" means that a cardboard for filing one or more documents is electronically represented. "Index" means the state that the documents registered in any one "folder", that is, data managed by an electronic note are displayed as a list.

Before using the functions of this embodiment, the user has to store necessary data in the RAM 3 by using the applications such as a schedule and a memo. In addition, a name is added to the title of "folder" represented in the "drawer" shown in Fig. 2 if necessary.

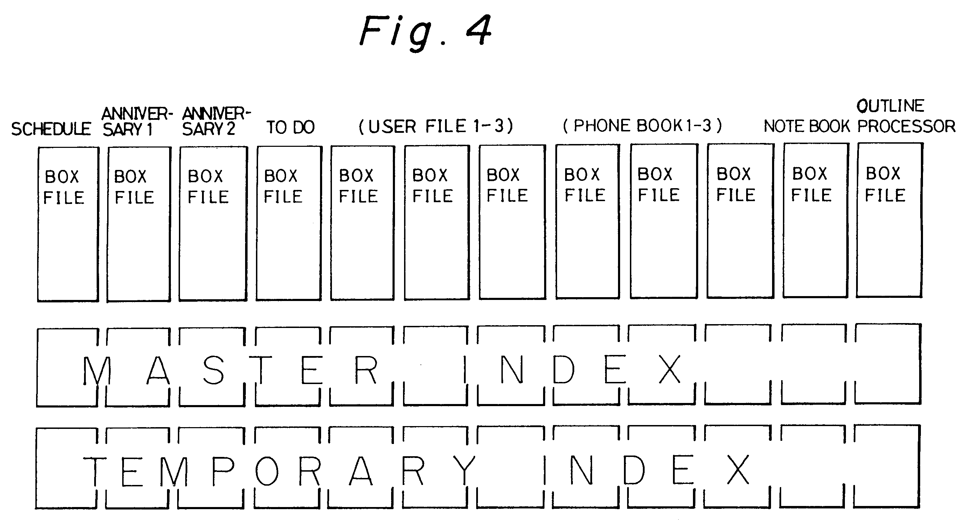

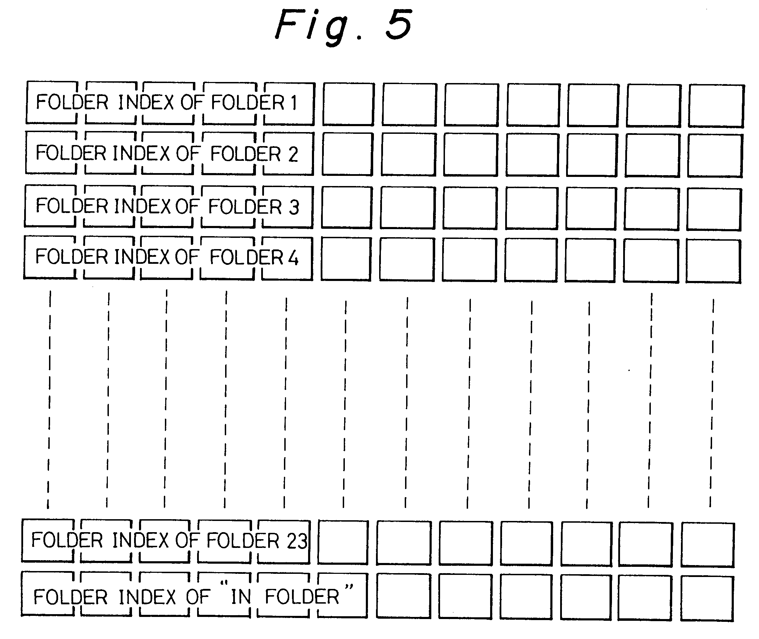

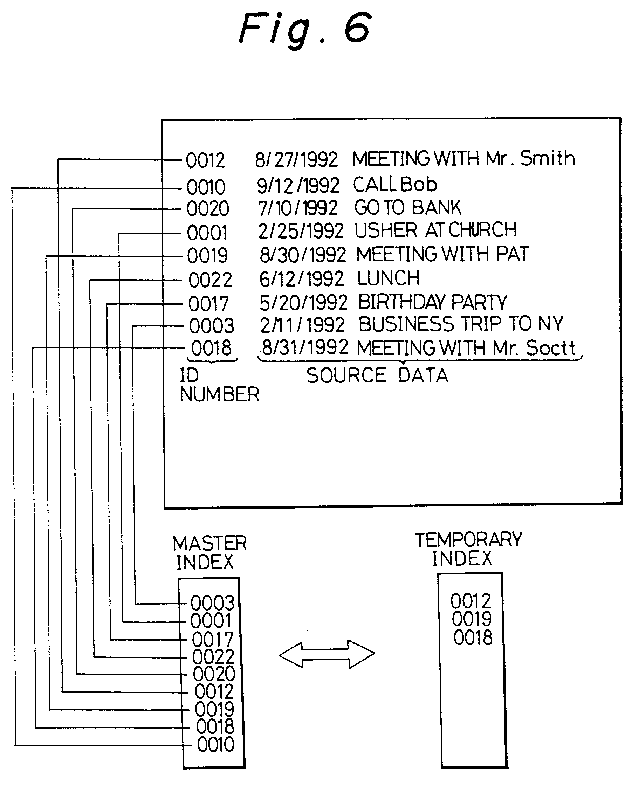

Fig. 4 is a view showing memory management according to this embodiment and for explaining a data file to be managed by each application. Fig. 5 is a view for explaining a folder index according to this embodiment. Fig. 6 is a view for explaining the conventional box file (an example of a schedule) and how a memory is managed according to the conventional application.

In Fig. 4, the schedule / anniversary 1 / anniversary 2 / to do / user file 1 / user file 2 / user file 3 / phone book 1 / phone book 2 / phone book 3 / notebook / outline processor are the titles of the application programs loaded in the electronic note according to this embodiment. The box file indicates data managed by each of the applications.

A method for managing data will be described as referring to Fig. 4. The master index and the temporary index shown in Fig. 4 and the box file composing the first memory are managed by the applications as shown in Fig. 6. A proper ID number is added to each data in the box file. The ID number is defined in a manner to avoid overlapping with the ID number pre-defined. If a certain data item is erased, the ID number of the erased data item is made empty. The empty ID number is allocated to another data to be inputted at the next time. In Fig. 6, the master index is managed in the order of date and a temporary index is an index temporarily created by defining the data about " meeting".

Hence, the ID numbers are not necessarily arranged in regular order in the box file. The master index is an index in which all the data items in the box file are rearranged in alphabetic order or date order. Each application provides a master index for viewing the data items in a fixed order (for example, date order for the schedule or alphabetic order for the phone book).

Each application provides a temporary index for showing rearranged data items in the box file if necessary or showing the data items defined according to a specific condition.

The function of this embodiment is management of source data in the box file of each application through the effect of a folder index served as a second memory shown in Fig. 5 independently of data management of each application. The total number of the folder indexes (288 in this embodiment) are defined by the product of the number of the applications (12 in this embodiment) and the number of folders (24 in this embodiment).

That is, one folder provides folder indexes corresponding to the applications to be registered therein. Hence, the data of any application can be registered only by selectively recording an ID number of data of only the corresponding folder index (for example, a folder index of the folder 1 immediately below the schedule shown in Fig. 4 when the data of the schedule is registered in the folder 1). With this operation, one folder enables to manage various kinds of data in various applications.

By showing to the user the content in a continuous table as shown in the representation of Fig. 3, it is possible to collect various data items belonging to various applications in the electronic note device from any view point for managing them.

The "IN folder" shown in Figs. 2 and 5 is a folder dedicated for receiving data as mentioned below.

Next, the procedure for registering data in the folder will be described.

The user can register any data managed by the applications such as a phone book, a schedule, and a memo in the "folder" displayed in the "drawer" of Fig. 2 with the two methods mentioned below.

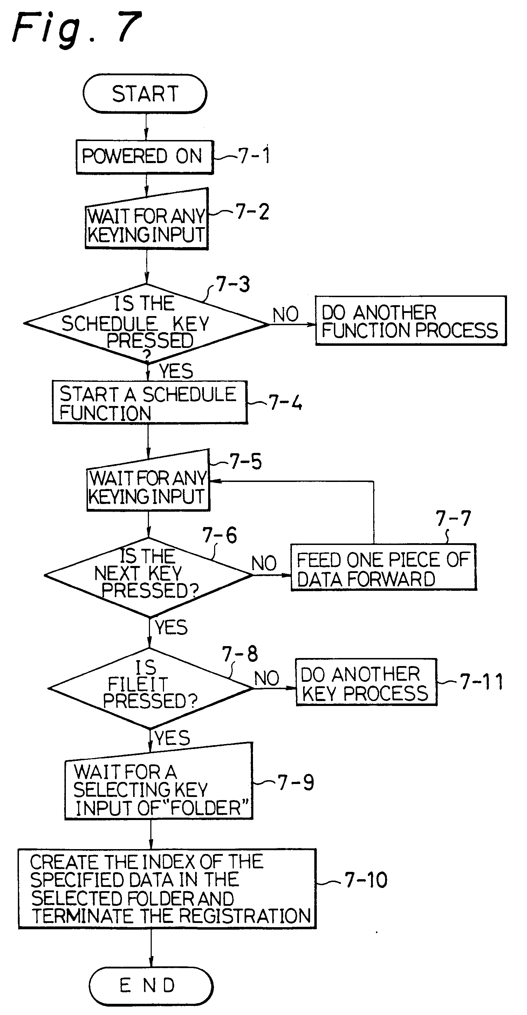

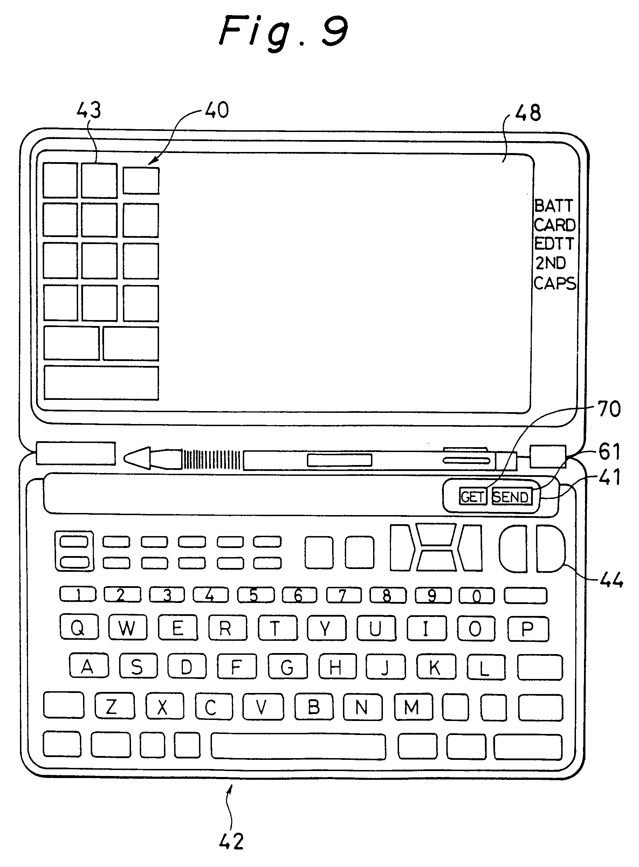

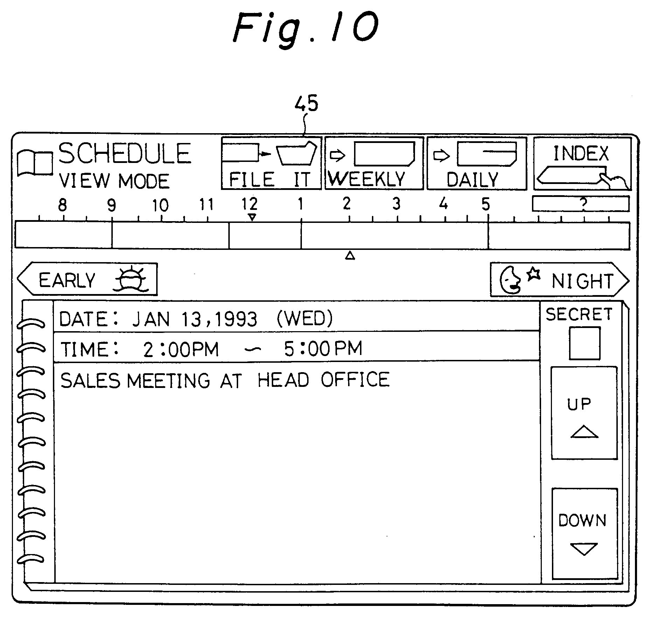

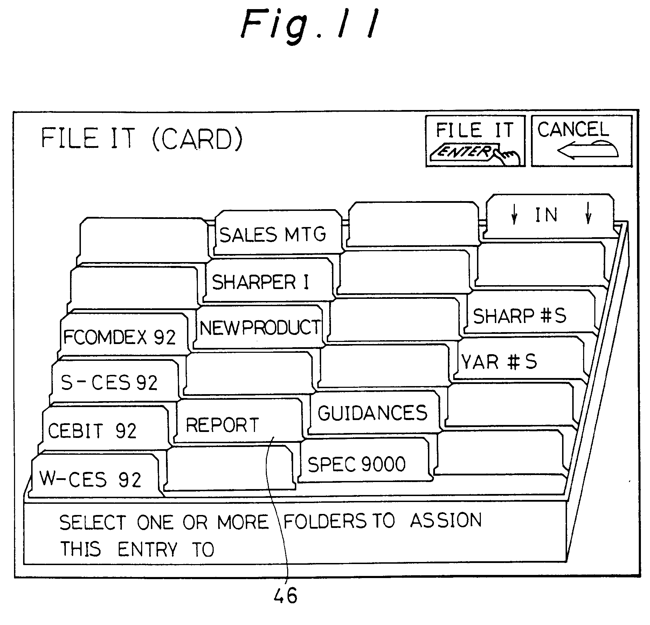

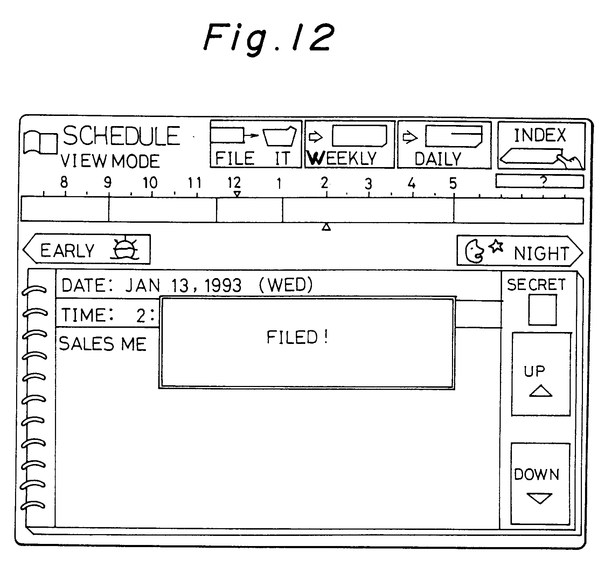

Fig. 7 is a flowchart showing a first procedure for registering data. Fig. 9 is a view for explaining a layout of an electronic note device. Figs. 10 to 12 are views showing display examples in the LCD display 48. In Fig. 7,
(A) The user powers on the electronic note device (7-1) so as to put the note device to a key input waiting state (7-2). By pressing any one of the application/function switching keys 40 shown in Fig. 9 (for example, pressing a schedule function 43), any application is started so that data may be displayed in the LCD display touch panel 48 (7-3, 7-4, see Fig. 10).
(B) Then, by pressing a NEXT key 44 of the application / function switching keys 42 shown in Fig. 9 for sequentially feeding data (7-5, 7-6, 7-7), the data to be registered next will be displayed. The NEXT key 44 is a key for feeding the displayed data items in forward direction one by one. The electronic note has a function of displaying a target data item by various retrieving keys in addition to the NEXT key. With the function, it is possible to display the data items which the user wants to register.
(C) By pressing "FILE IT" with the main keys or on the touch panel in that state (see FILE IT 45 of Fig. 10) (7-8), the display analogous to the display "drawer" shown in Fig. 2 appears (see Fig. 11). If "FILE IT" is not depressed, another keying operation is done (7-11). By selecting the "folder" which the user wants to register (7-9), the ID number of the data displayed in (B) is recorded in the selected "folder" and then the registration is terminated (see Fig. 12, select "Report 46" of Fig. 11 (7-10).

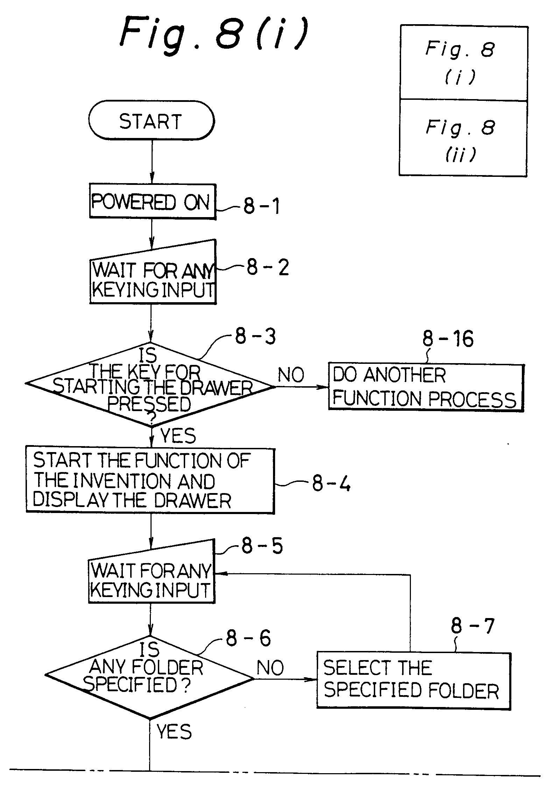

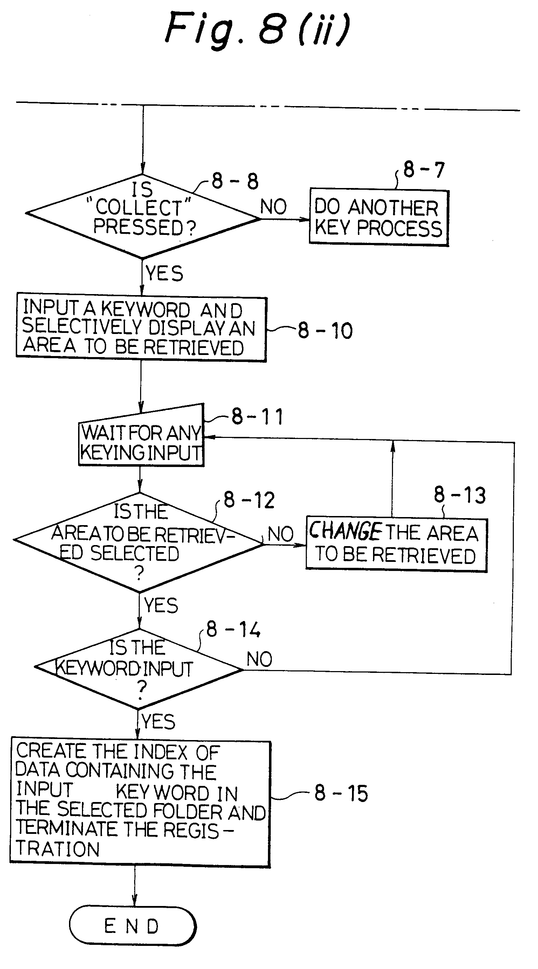

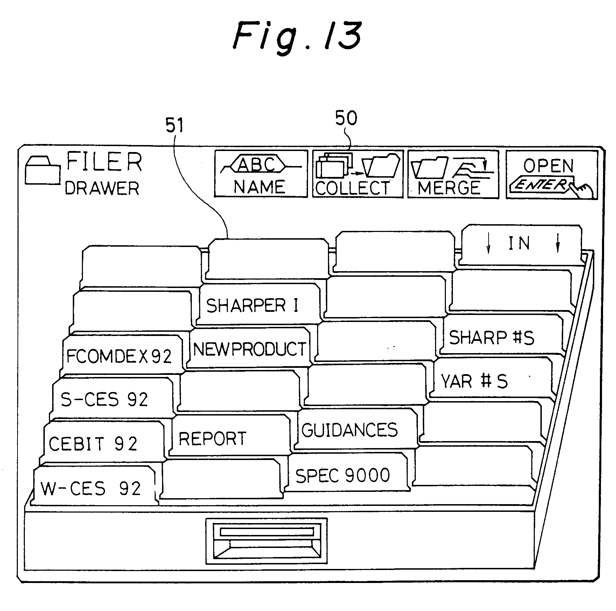

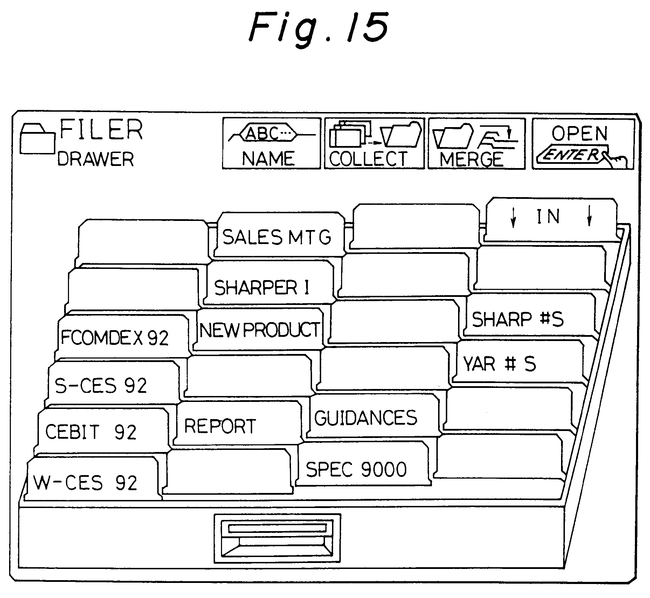

Fig. 8 is a flowchart for indicating a second procedure for registering data items. Figs. 13 to 15 are views showing display examples on the LCD display 48.

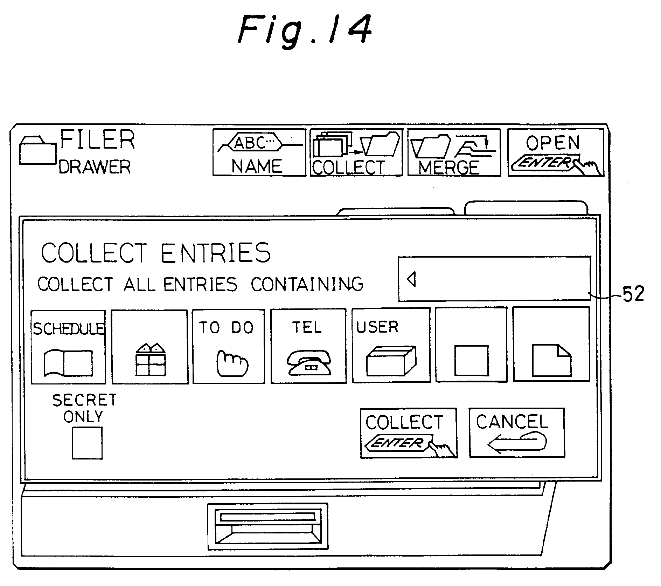

This is a method for automatically combining plural data items and registering them in a folder with the first registering method and the function of retrieving all the data items of the electronic note device. This method will be described as referring to Fig. 8.
(A) At first, the user powers on the electronic note (8-1). Then, by pressing any one of the application switching keys 40 in Fig. 9 (for example, the Filer key), the function of this embodiment is started (8-2, 8-3) so as to display the "drawer" 51 (see Fig. 13, 8-4). If not pressed, another function process is done (8-16).
(B) After any folder is selected on the displayed screen (reference numbers 51, 8-5, 8-6, 8-7 of Fig. 13). the "COLLECT" keys are pressed by the main keys or on the touch panel (COLLECT 50, 8-8 in Fig. 13). If not pressed, another keying operation is done (8-17). By depressing the COLLECT key 50 of Fig. 13, a key word displayed on the touch panel 48 is inputted at the reference number 52 of Fig. 14 on the screen for specifying an area to be retrieved (8-10). In this state, it is possible to specify the application from which data is collected if necessary. If no application is specified, all the applications are to be retrieved.
(C) The data containing the key word is retrieved (8-11, 8-12, 8-13) and the ID number of the corresponding data is registered in the folder index for the application to which the data belongs in the "folder" specified by (B) (8-14). By repetitively doing this operation, all the corresponding data items are registered and then the operation of registering the data containing the key word is terminated (see Fig. 15, 8-15).

In any case, the function of this embodiment is the new creation of an index (folder index) of target source data on the RAM. The data itself is not registered in the RAM in an overlapped manner. Hence, with the function of this embodiment, the leased memory is quite smaller than the area of the memory the source data occupies. Further, by modifying and deleting the source data, the modification and deletion is reflected on the data displayed in the "index" of this embodiment.

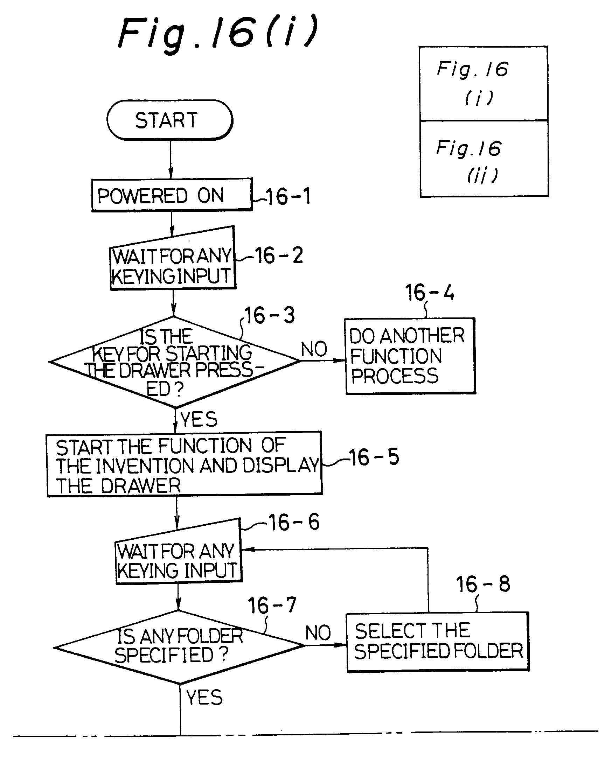

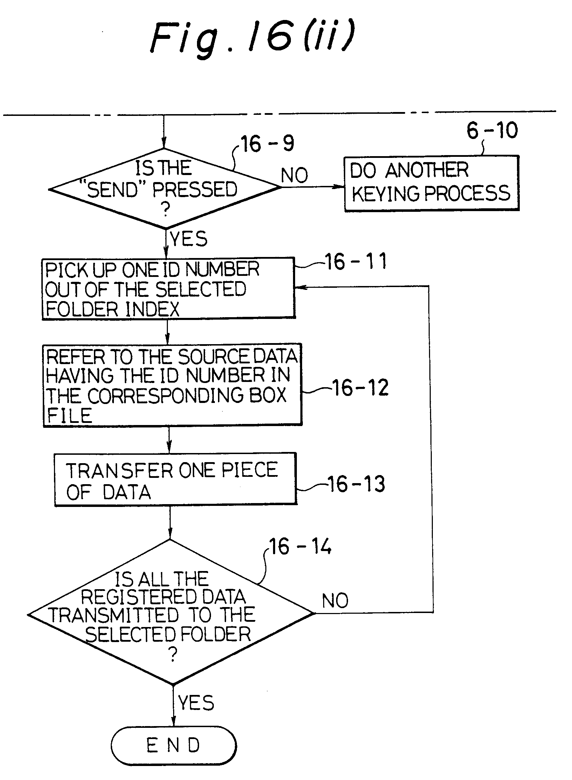

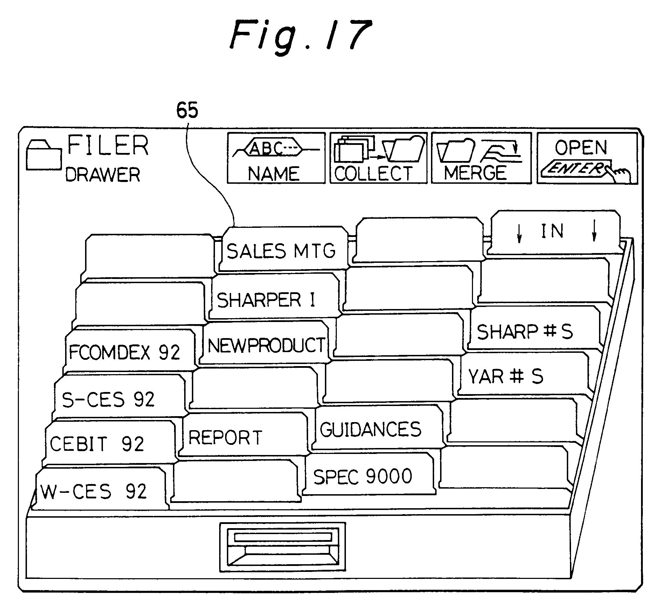

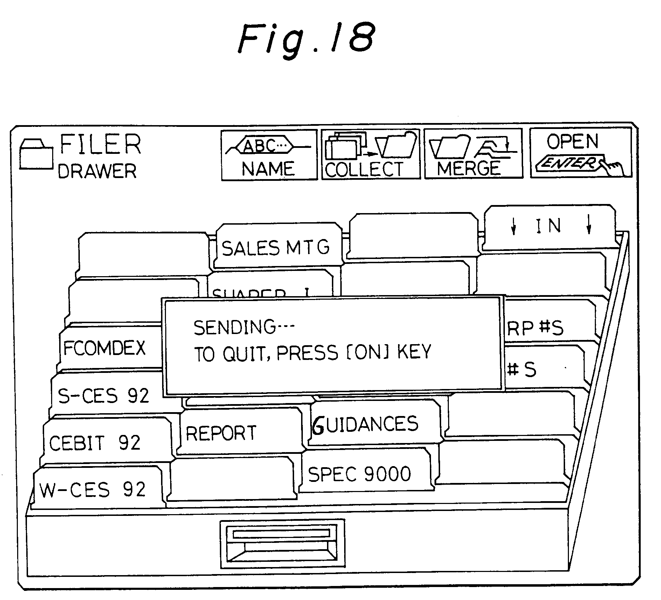

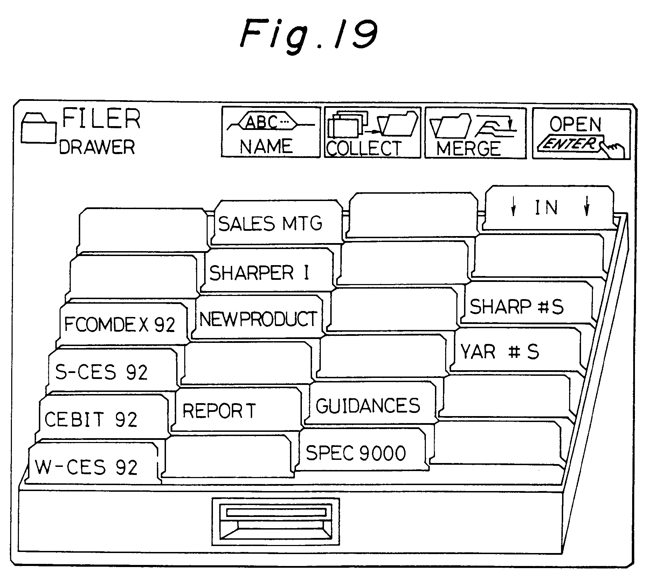

Fig. 16 is a flowchart showing a procedure for transferring data with another electronic device. Figs. 17 to 19 are views showing display examples appearing on the LCD display 48. As stated before, the procedure for transmitting the data of various applications managed by one "folder" (12 folder indexes) as a batch will be described as referring to Fig. 16.
(A) At first, the user power on the electronic note device (16-1). By pressing the filter key of the application switching key 40 shown in Fig. 9, the function of this embodiment is started (16-2, 16-3, 16-5). If no switching key 40 is pressed, another functional process is done (16-4).
(B) By displaying the "drawer" (see Fig. 17), by the main keys (16-6), any "folder" is touched (number 65 of Fig. 17) and the "folder" to be transmitted next is specified (16-7, 16-8).
(C) A "SEND" key 61 of the main keys (Fig. 9) is pressed (16-9). If not pressed, another keying process is done (16-10).
(D) A message is displayed and the data registered in the "folder" specified by (B) is transferred in sequence (Fig. 18). That is, if the specified "folder" is a folder 1 shown in Fig. 4, by referring to the folder index (corresponding to the schedule data) at the left end of the folder 1, the source data having the registered ID number is picked out of the box file of the schedule and then is transmitted (See Fig. 18, 16-11, 16-12, 16-13). Next, by repeating this operation about all folder indexes of the folder 1, the transmission is terminated (see Fig. 19, 16-14).

The data is transferred to an electronic device having a communicating function such as an electronic note device, a personal computer or a printer. As transfer hardware means, it is possible to select cable connection, a public phone line or optical communication between the hardware arrangement of an electronic note shown in Fig. 1 and the additional peripheral device.

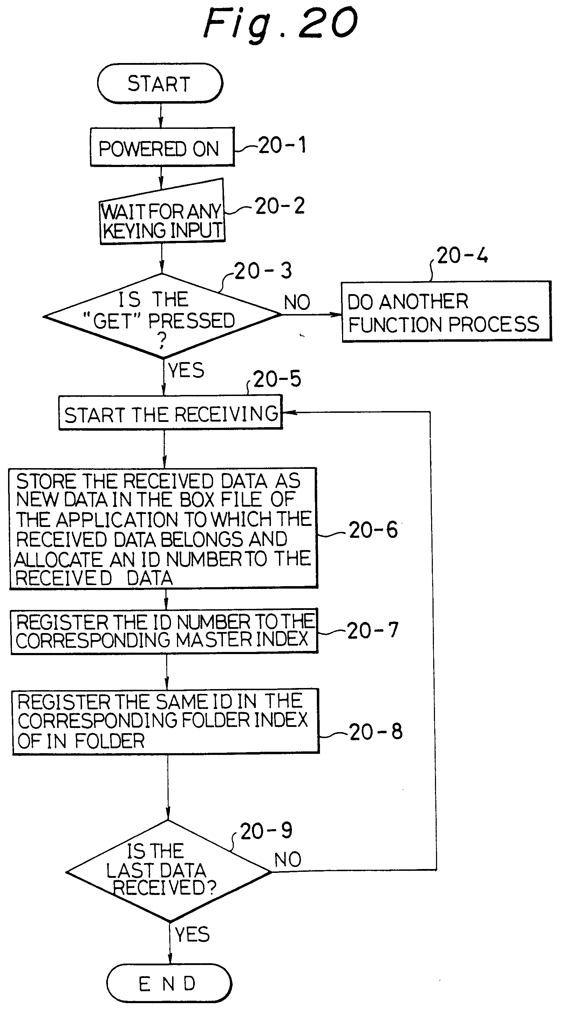

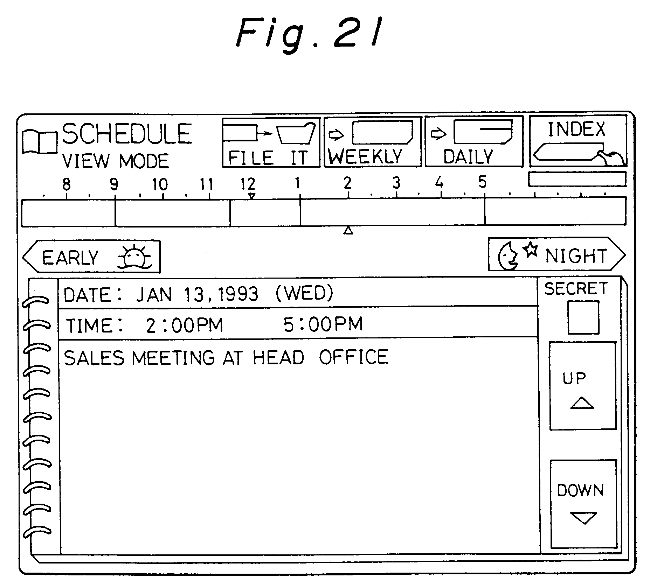

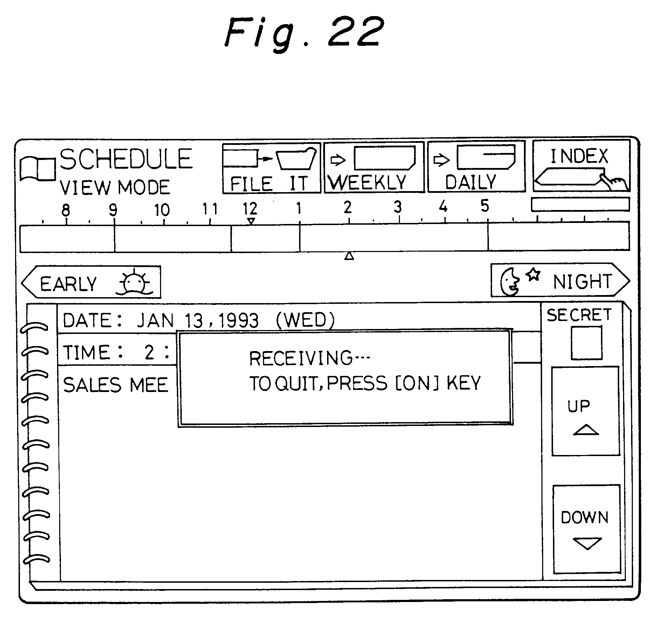

Fig. 20 is a flowchart showing a procedure for receiving data. Figs. 21 to 25 are views showing the display examples on the LCD display 48. Then, the description will be oriented to the procedure for receiving data sent from an electronic note device in the "folder" of another electronic note device as a batch with the foregoing method.
(A) The user powers on the electronic note device on the transmitting side or the receiving side (20-1).
(B) As keeping the electronic note on the receiving side in any display state, the "GET" key 70 of the main keys 41 is pressed (20-2, 20-3, see Fig. 21). If not pressed, another function process is done (20-4). The ID number of the received data is registered in the receive-only "In Folder" 30 shown in Figs. 2 and 4 is registered. Hence, the user does not need to specify the received folders one by one.
(C) The data in the "folder" is transmitted from the electronic note device on the transmitting side as a batch according to the procedure shown in Fig. 16. On the receiving side, when one data item is received, a message appears on the display on the receiving side (20-5, see Fig. 22). The data is stored in the box file of the application (for example, schedule) to which the data belongs and new proper ID numbers are allocated to the data (20-5, 20-6). Next, the ID numbers are properly rearranged in the corresponding (master index for schedule) (in the date order if it is the schedule) and then the rearranged data items are registered (20-7).

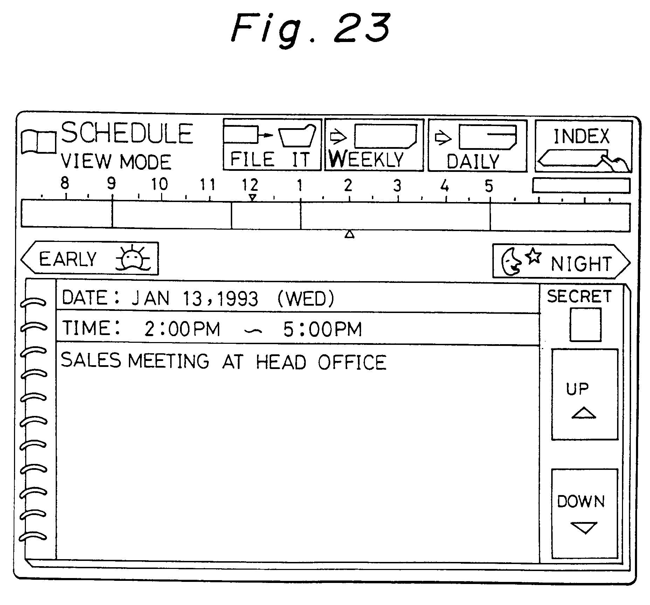

The operation described up to this point is the same as that of the conventional electronic note device. In this embodiment, however, the ID numbers are registered in the folder index (at the left end if it is the schedule) of the IN folder of Fig. 4 in an overlapped manner (20-8). By repeating this operation each time the data item is received, all the data items are stored in each of the applications and the ID numbers are also registered in the corresponding "folder index" of "IN folder" (20-9, see Fig. 23).

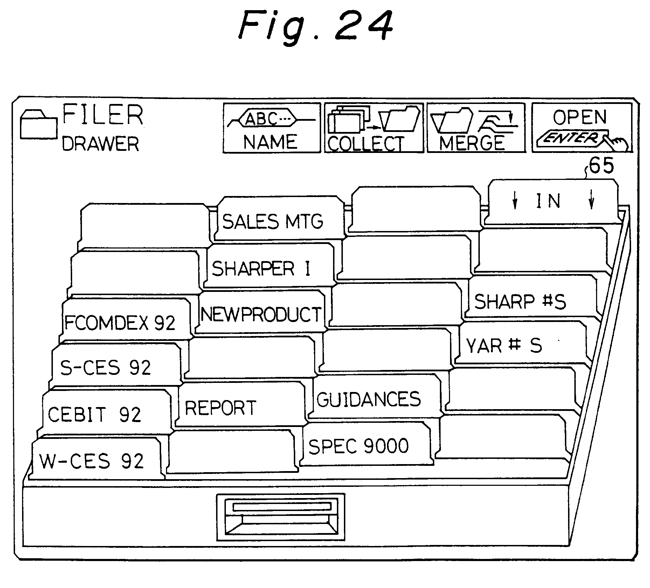

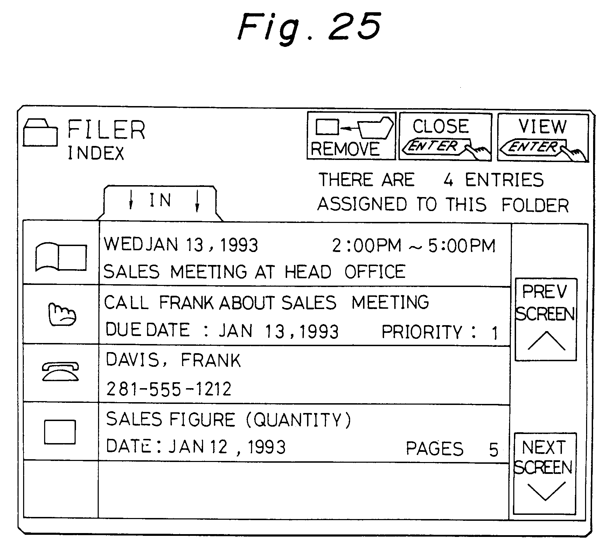

The received source data of the phone book, the schedule, or the memo are arranged in the date order and the alphabetic order by the corresponding applications. The source data is managed with the data stored before received in the electronic note on the receiving side. Hence, like the conventional electronic note device, the source data is allowed to be retrieved in the date order or the alphabetic order. In addition, the received data is registered in the "IN folder" corresponding to the function of this embodiment and the content is checked by showing the "Index" display of Fig. 2 (see Figs. 24 and 25). Hence, the user can manage the data easily stored before receiving and the received data individually. Though the "IN folder" is a "folder dedicated to receiving the data, the user can move the data received in the "IN folder" to any "folder" with another function of the electronic note device.

Next, the theme management will be described.

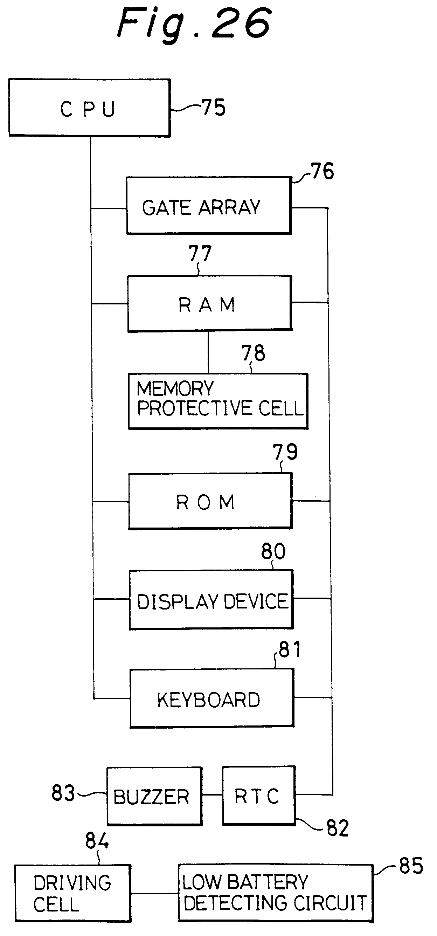

Fig. 26 is a view for explaining a hardware arrangement

As shown in Fig. 26, the electronic note device is arranged of a CPU 75 served as a control unit, a gate array 76, a RAM 77 for storing data, a memory protecting cell 78, a ROM 79 for storing application programs for realizing electronic note functions, a display device 80, a keyboard 81, a realtime clock (RTC) 82, a buzzer 83, a low battery detecting circuit 85, and a driving cell 84 for the low battery detecting circuit 85.

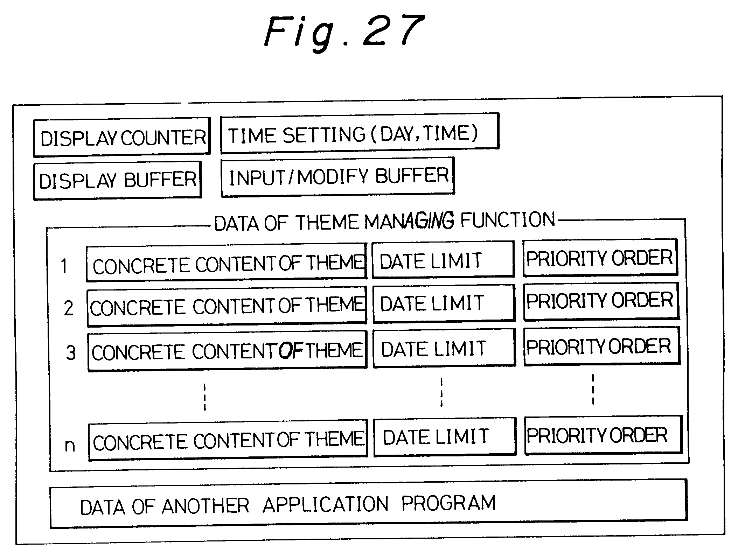

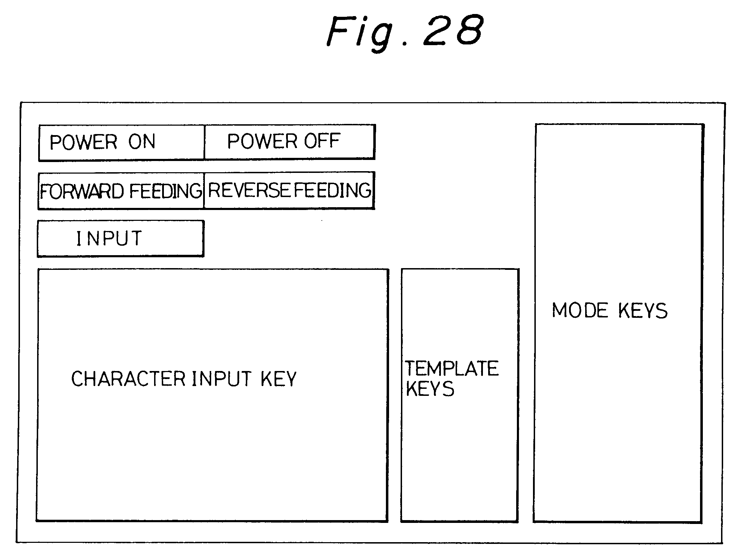

Fig. 27 shows an arrangement of the RAM and Fig. 28 shows an arrangement of a keyboard.

The RAM 77 contains an area for storing data (data of a theme managing function, data of another application program) of each application program shown in Fig. 27, an area for registering a set time of a clock, an inputting/modifying buffer, and a displaying buffer.

As shown in Fig. 28, the keyboard includes mode keys for starting each of the application programs, keys for inputting characters, template keys for inputting figures, input keys for registering data, "forward feeding" and "reverse feeding" keys for calling the registered data, a key for turning on/off the power.

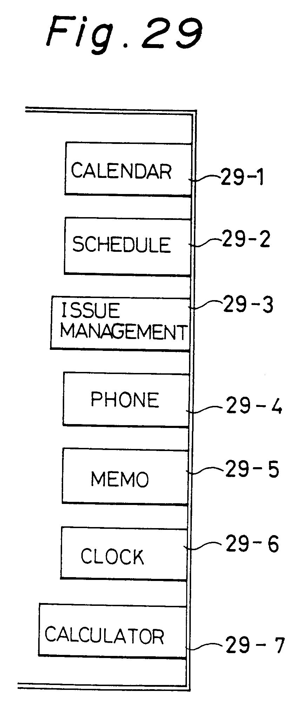

Fig. 29 is a view for explaining the function selecting keys.

The mode keys are composed of a calendar key (29-1), a schedule key (29-2), a theme managing key (29-3) a phone key (29-4), a memo key (29-5), a clock key (29-6), and a calculating key (29-7) shown in Fig. 29. In particular, the theme managing key (29-3) is for starting a program for managing the theme.

Fig. 30 is a flowchart for explaining start of a program.

As shown in Fig. 30, when the electronic note device is powered (30-1), each part of the electronic note device is initialized (30-2) By pressing any one of the functional selecting keys shown in Fig. 29, the application program corresponding to each of the keys is started.

In this functional operation, the procedure for inputting the content of a theme along inquiry items and putting the inputted data in the RAM by pressing the key for defining the input is the same as the general procedure.

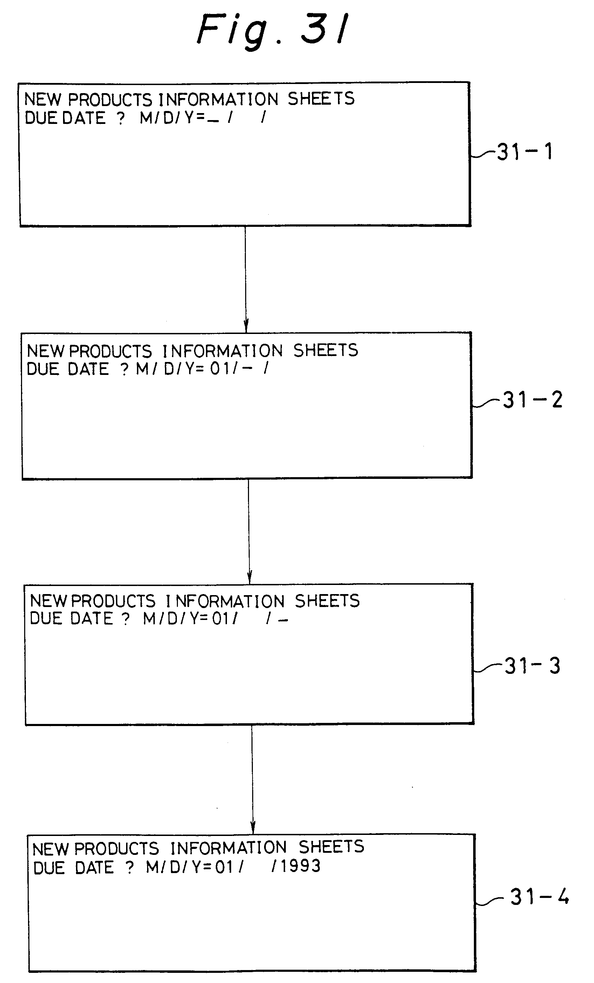

Fig. 31 is a view for explaining the display of a screen in that operation.

The feature is to define the content of the item at the step (35-3) of Fig. 35 shown in Fig. 31, press the input key, display a guidance screen (31) prompting an input of data limit, input a month, that is, "01" (screen 31-2), skip a day, (that is, input "space" and "space") (screen 31-3), input a year, that is, "1993" (screen 31-4), define the item content, press the input key, and indicate a guidance prompting an input of "priority order" at the step (35-7) of Fig. 35. The later operation is the same as the general operation.

The contents of the registered themes are sequentially called by pressing the calling key.

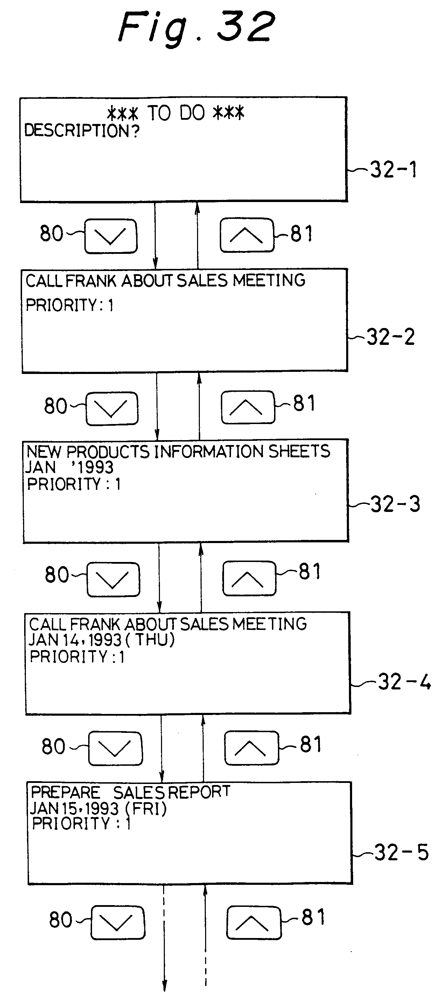

Fig. 32 is a view for explaining the display of a screen appearing when the data of a theme managing function is called.

The basic operation is the same as the prior art. The "monthly goal" in which no day is inputted is called on a monthly unit before the day-specified data in the "priority order" as shown in Fig. 32. In Fig. 32, 80 denotes a forward feeding key and 81 denotes a reverse feeding key. With each keying operation, the screen is allowed to be optionally fed forward or reversely. The screens 32-1 and 32-2 are the same as the screens 36-1 and 36-2. The screen 32-3 indicates the "monthly goal" of January, 1993. The screens 32-4 and 32-5 indicate the "goal for which a day is specified" of January 1993. The screens 32-3, 32-4 and 32-5 indicate the data whose limit date is January 1993.

Fig. 33 is a view for explaining a calendar of the month listed to have the "monthly goal". Fig. 34 is a view for explaining the conventional calendar display.

The conventional calendar display is enabled so that the calendar of the month may be displayed when the calendar key (29-1) shown in Fig. 29 is pressed (see Fig. 34). On the other hand, as shown in Fig. 33, the "monthly goals [2] New products" are displayed with the month calendar so that the user may make sure of the monthly goals at a glance.

As described above, with a quite simple operation, the management of themes for any month is allowed to be done without having to change the data structure used in the prior art.

## Claims

1. An electronic note device, comprising:
- a first memory (3) for storing plural pieces of data in respective areas according to various applications,
- a second memory (3) for storing data selected from said plural pieces of data stored in said first memory (3),
- input means (6) for inputting data to said first and second memories (3),
- display means (22) for displaying data stored in said first and second memories (3), and
- control means (22, 4) for controlling said first memory (3), said second memory (3), said input means (6) and said display means (22), so that said input means (6) is enabled to input data to said first and second memories (3) and said display means (22) is enabled to display data stored in said first and second memories (3), wherein:
- various kinds of data crossed over the various applications are stored in said first and second memories in a non-overlapped manner, and
- said second memory (3) stores folder indexes to said plural pieces of data stored in said first memory (3) in the respective areas according to the applications, with a folder including various kinds of data in various applications.

2. An electronic note device as claimed in claim 1, further comprising means (9, 17) for transmitting data stored in said second memory (3) to another electronic device.

3. An electronic note device as claimed in claim 1 or 2, further comprising means (9, 17) for receiving data transmitted from another electronic device.

## Patentansprüche

1. Elektronische Notizvorrichtung, umfassend:
- einen ersten Speicher (3) zum Speichern von mehreren Datenstücken in jeweiligen Bereichen entsprechend verschiedenen Anwendungen,
- einen zweiten Speicher (3) zum Speichern von Daten, die aus den mehreren Datenstücken ausgewählt sind, die in dem ersten Speicher (3) gespeichert sind,
- eine Eingabeeinrichtung (6) zum Eingeben von Daten in den ersten und zweiten Speicher (3),
- eine Anzeigeeinrichtung (22) zum Anzeigen von Daten, die in den ersten und zweiten Speichern (3) gespeichert sind, und
- eine Steuereinrichtung (24) zum Steuern des ersten Speichers (3), des zweiten Speichers (3), der Eingabeeinrichtung (6) und der Anzeigeeinrichtung (22), so daß die Eingabeeinrichtung (6) freigegeben wird, um Daten in den ersten und den zweiten Speicher (3) einzugeben, und die Anzeigeeinrichtung (22) freigegeben ist, um in den ersten und zweiten Speichern (3) gespeicherte Daten anzuzeigen, wobei:
- verschiedene Arten von Daten, die über die verschiedenen Anwendungen gekreuzt sind, in den ersten und zweiten Speichern in einer nicht-überlappten Weise gespeichert sind, und
- der zweite Speicher (3) Umschlagindices für die mehreren Datenstücke, die in dem ersten Speicher (3) gespeichert sind, in den jeweiligen Bereichen entsprechend den Anwendungen speichert, wobei ein Umschlag verschiedene Arten von Daten in verschiedenen Anwendungen umfaßt.

2. Elektronische Notizvorrichtung nach Anspruch 1, weiterhin umfassend eine Einrichtung (9, 17) zum Übertragen der in dem zweiten Speicher (3) gespeicherten Daten zu einer anderen elektronischen Vorrichtung.

3. Elektronische Notizvorrichtung nach Anspruch 1 oder 2, weiterhin umfassend eine Einrichtung (9, 17) zum Empfangen von Daten, die von einer anderen elektronischen Vorrichtung übertragen sind.

## Revendications

1. Dispositif d'agenda électronique comprenant :
une première mémoire (3) destinée à stocker une multiplicité d'éléments de données dans des zones respectives en fonction de différentes applications,
une seconde mémoire (3) destinée à stocker des données choisies parmi les éléments de données de ladite multiplicité d'éléments de données stockée dans ladite première mémoire (3),
un moyen de saisie (6) destiné à saisir des données dans lesdites première et seconde mémoires (3),
un moyen d'affichage (22) destiné à afficher des données stockées dans lesdites première et seconde mémoires (3), et
un moyen de contrôle (4) destiné à contrôler ladite première mémoire (3), ladite seconde mémoire (3), ledit moyen de saisie (6) et ledit moyen d'affichage (22) de sorte que ledit moyen de saisie (6) sort en mesure de permettre la saisie de données dans lesdites première et seconde mémoires (3) et que ledit moyen d'affichage (22) soit en mesure d'afficher des données stockées dans lesdites première et seconde mémoires (3), dans lequel :
différents types de données partagés par différentes applications sont stockés dans lesdites première et seconde mémoires selon un mode ne comportant pas de chevauchement, et
ladite seconde mémoire (3) stocke des indices de dossiers dans ladite multiplicité d'éléments de données stockée dans ladite première mémoire (3) dans les zones respectives de données en fonction des applications, un dossier comprenant différents types de données de différentes applications.

2. Dispositif d'agenda électronique selon la revendication 1, comprenant en outre un moyen (9, 17) destiné à émettre des données stockées dans ladite seconde mémoire (3) vers un autre dispositif électronique.

3. Dispositif d'agenda électronique selon la revendication 1 ou la revendication 2, comprenant en outre un moyen (9, 17) destiné à recevoir des données émises par un autre dispositif électronique.
